# FASCICULE DE BREVET EUROPEEN

(11) **EP 1 730 245 B1**
(45) Date de publication et mention de la délivrance du brevet: **17.10.2007**
(21) Numéro de dépôt: 05732884.1
(22) Date de dépôt: 03.03.2005
(51) Int. Cl.: C09D 193/00

(54) **EMULSION A BASE DE STANDOLIES D'HUILES VEGETALES OU ANIMALES ET D'EMULSIFIANTS NATURELS**
EMULSION AUF BASIS VON TIERISCHEN ODER PFLANZLICHEN STANDÖLEN UND NATÜRLICHEN EMULGATOREN
EMULSION BASED ON ANIMAL OR VEGETABLE OIL STANDOILS AND NATURAL EMULSIFIERS

(30) Priorité: 03.03.2004 FR 0402211
(43) Date de publication de la demande: 13.12.2006
(73) Titulaire: Albaco, 27290 Pont Authou (FR)
(72) Inventeur: ALOUCHE, Adel, Salamieh (SY); BUNNEL, Claude, INSA Rouen,Lab. Mat. Macro. L2M, F-76131 Mont Saint Aignan Cedex (FR); LECAMP, Laurence, INSA Rouen,Lab. Mat. Macro. L2M, F-76131 Mont Saint Aignan Cedex (FR); BARRE, Thierry, F-27290 Pont Authou (FR)
(74) Mandataire: Casalonga, Axel
(86) Numéro de dépôt international: PCT/FR2005/000499
(87) Numéro de publication internationale: WO 2005/087883

(56) Documents cités:
- EP-A- 0 652 270
- DE-C- 747 419
- US-A1- 2001 021 739

## Description

La présente invention est relative à de nouvelles émulsions à base de standolies d'huiles végétales ou animales et d'un émulsifiant naturel, ainsi qu'à des peintures à base de ces émulsions.

Les compositions de peinture comprennent traditionnellement un liant, qui peut être une gomme, une résine naturelle ou artificielle ou encore une huile oxydable et polymérisable, ainsi qu'un ou plusieurs solvants ou diluants organiques, toxiques, qui permettent de transformer le liant en une solution assez fluide pour être facilement applicable en couche mince.

La volonté de protéger l'environnement a entraîné ces dernières années des réglementations visant à réduire sensiblement l'émission de composés organiques volatils (COV) dans les produits industriels organiques, et notamment les peintures.

Par ailleurs, des projets de réglementation envisagent des taxes supplémentaires pour les peintures employant des produits chimiques, ceci tout au long de la chaîne de production ainsi que pour les utilisateurs.

Ces exigences européennes et internationales conduisent à l'augmentation de l'emploi de matières premières naturelles dans les peintures.

Le brevet US 6,599,972 décrit une composition sous forme d'émulsion comprenant un copolymère obtenu notamment par copolymérisation d'un dérivé insaturé d'une huile naturelle.

Toutefois, cette émulsion n'est pas totalement naturelle et les résidus de lavage et de rinçage de la peinture sont polluants. De plus, l'émission de composés volatils n'est pas totalement enrayée.

Le brevet DE 747 419 décrit un procédé de préparation de compositions de liants pour peinture à partir d'huiles, de standolies et de résines naturelles et synthétiques, utilisant, à titre d'émulsifiants, des savons d'acides gras, en des quantités élevées, supérieures à 15%, ce qui conduit à des émulsions trop visqueuses.

La demande EP 0 652 270 décrit des compositions de revêtement diluables à l'eau comprenant des résines naturelles, des huiles naturelles comme les standolies, des alcalis, des cires, des pigments, des adjuvants, comme la caséine et la lécithine, et de l'eau. Les peintures des exemples comprennent 1,5% de caséine.

Ces peintures ne sont toutefois pas suffisamment stables et présentent des difficultés à sécher.

La présente invention se propose de remédier à ces inconvénients.

En particulier, la demanderesse a découvert de façon surprenante que l'association de standolies d'huiles d'origine végétale ou animale avec un émulsifiant nature particulier, présent dans l'émulsion à des teneurs comprises entre 3 et 10% en poids du poids total de l'émulsion, en l'absence de solvant ou de diluant organique et de résine synthétique, conduisait à des émulsions stables, pouvant être utilisées pour la préparation de peintures qui ne dégagent aucun composé organique volatil, et dont les eaux de lavage et de rinçage sont biodégradables.

Elle a en outre constaté que ces peintures, exemptes de solvants organiques et de résines synthétiques, étaient particulièrement écologiques.

Enfin, elle a constaté que le temps de séchage des peintures selon l'invention était comparable à celui de peintures comprenant des solvants organiques.

La présente invention a donc pour objet une émulsion, caractérisée en ce qu'elle comprend au moins une standolie d'huile végétale ou animale et au moins un émulsifiant naturel, présent dans l'émulsion à des teneurs comprises entre 3 et 10% en poids du poids total de l'émulsion et choisi parmi la caséine, la lécithine de soja, la lécithine d'oeuf, le monostéarate de glycérol, et en ce qu'elle est exemple de solvant ou diluant organique et de résine synthétique.

Elle a également pour objet une peinture comprenant une telle émulsion, ainsi que son utilisation pour la protection de matériaux, à l'intérieur comme à l'extérieur, et pour la décoration.

D'autres objets de l'invention apparaîtront à la lecture de la description et, des exemples qui suivent.

La standolie d'huile végétale peut être choisie parmi les standolies d'huile de lin, de ricin, de bois, de soja, de tournesol, de coton, de carthame, d'hévéa, de tabac, de pépins de raisin, d'oeillette. On utilise de préférence la standolie d'huile de lin.

La standolie d'huile animale peut être choisie parmi les standolies d'huiles de poissons, et notamment les standolies d'huile de cachalot, de baleine, de sardine.

La standolie peut être présente dans l'émulsion à des teneurs comprises entre 10 et 60%, et de préférence entre 15 et 40 % en poids du poids total de l'émulsion.

L'émulsifiant est choisi parmi la caséine, la lécithine de soja, la lécithine d' oeuf, le monostéarate de glycérol.

L'émulsifiant est de préférence la caséine ou la lécithine de soja. Encore de préférence, l'émulsifiant est la caséine, ce qui permet un séchage plus rapide de la peinture.

L'émulsifiant est présent dans l'émulsion à des teneurs comprises entre 3 et 10% en poids du poids total de l'émulsion, ce qui permet d'obtenir une émulsion stable. Pour une teneur en émulsifiant supérieure à 10%, l'émulsion est de consistance trop pâteuse. Pour une teneur en émulsifiant inférieure à 3%, la peinture séchera difficilement. La teneur en émulsifiant peut en particulier être comprise entre 5 et 10%, et de préférence entre 7 et 9% du poids total de l'émulsion.

L'émulsion est réalisée de préférence en milieu basique.

Lorsque le milieu est basique, il comprend de préférence de l'ammoniac. En effet, au cours du séchage, l'ammoniac disparaît avec l'eau et rend l'émulsifiant insoluble dans l'eau.

Le pH de l'émulsion est compris avantageusement entre 8 et 12, et de préférence entre 8,5 et 10.

L'émulsion peut comprendre en outre une ou plusieurs résines naturelles, permettant d'augmenter la dureté, la souplesse ou la brillance de l'émulsion selon l'utilisation souhaitée. La résine naturelle peut être choisie parmi le latex (caoutchouc naturel), la colophane et la gomme arabique.

La ou les résines peuvent être présentes dans l'émulsion à des teneurs comprises entre 0,5 et 10% en poids du poids total de l'émulsion.

L'émulsion selon l'invention peut comprendre aussi des agents épaississants ou des gélifiants et des agents stabilisants comme l'hexamétaphosphate de sodium, qui améliorent sa stabilité dans le temps.

Les peintures selon l'invention peuvent comprendre, outre l'émulsion, un ou plusieurs pigments blancs ou colorés et des charges. Le ou les pigments blancs ou colorés et les charges sont de préférence choisis parmi les ocres, les terres de sienne et d'ombre, la terre verte, le lithopone, l'oxyde de zinc, l'oxyde de titane, la céruse, l'oxyde de fer rouge, jaune ou noir, le noir de carbone d'origine végétale ou animale, le pastel, la gaude, la garance, le carbonate de calcium, le kaolin, l'alumine, la silice, le talc, le mica et leurs mélanges.

Les pigments blancs ou colorés et les charges peuvent être présents dans la peinture à des teneurs comprises entre 10 et 70 %, et de préférence entre 20 et 60 % en poids du poids total de la peinture. L'homme du métier ajustera la quantité de pigments et de charges en fonction de l'utilisation de la peinture, selon qu'elle est par exemple destinée au bâtiment, à des revêtements en bois ou à des revêtements métalliques.

Les peintures selon l'invention peuvent comprendre en outre des siccatifs, des agents anti-oxydants, et d'autres adjuvants comme des agents anti-mousse et des huiles parfumées.

Les peintures à bases des émulsions selon l'invention sont imperméables à l'eau et lessivables. Elles peuvent notamment être utilisées pour la protection de matériaux, à l'intérieur comme à l'extérieur, notamment dans des installations industrielles, et pour le ravalement. Elles peuvent également être utilisées pour la décoration d'objets.

Les exemples suivants sont destinés à illustrer l'invention.

### Exemple 1

On prépare l'émulsion suivante :

On chauffe dans un récipient en acier inoxydable 595 grammes d'eau distillée à une température de 80°C. On maintient cette température pendant toute la durée de la préparation.

On ajoute ensuite sous forte agitation:
- 3 grammes d'une solution aqueuse d'ammoniac à 20%
- 100 grammes de caséine
- 300 grammes de standolie d'huile de lin
- 2 grammes d'hexamétaphosphate de sodium.

Au bout d'une heure d'agitation, on contrôle le résultat en appliquant l'émulsion sur une plaque de verre. Le feuil, bien tendu et sans défauts, est sec au toucher en trois heures.

La viscosité de l'émulsion obtenue pourra être ajustée en ajoutant de l'eau.

### Exemple 2

On prépare une émulsion de composition suivante (pour 1000 kg d'émulsion) :
- 10 kg d'une solution aqueuse d'ammoniac à 20%
- 2 kg de NATROSOL (hydroxyéthylcellulose, éventuellement modifiée, commercialisée par la société AQUALON)
- 1 kg d'hexamétaphosphate de sodium
- 75 kg de caséine
- 425 kg de standolie d'huile de lin
- 487 kg d'eau

On verse dans une cuve en acier inoxydable 487 kg d'eau, on ajoute ensuite 10 kg d'une solution aqueuse d'ammoniac à 20%. Le pH de la solution est compris entre 11,5 et 12 .

On ajoute sous faible agitation 2 kg de NATROSOL et on maintient l'agitation pendant environ une heure jusqu'à l'obtention d'un gel.

On ajoute ensuite 1 kg d'hexamétaphosphate de sodium pour stabiliser l'émulsion, puis 75 kg de caséine, sous forte agitation, jusqu'à l'obtention d'une pâte.

Puis on ajoute lentement 425 kg de standolie d'huile de lin sous forte agitation. On obtient une émulsion de pH environ 8,5.

Cette émulsion est stockée pour être utilisée comme liant pour la préparation de peintures.

### Exemple 3

On prépare une peinture de composition suivante :
- 5 kg d'une solution d'ammoniac à 20%
- 2 kg de NATROSOL
- 2 kg d'agent anti-mousse à base d'ester d'acide gras
- 250 kg d'oxyde de titane
- 25 kg d'oxyde de zinc
- 500 kg d'émulsion selon l'exemple 2
- 15 kg de siccatif à base de cobalt
- 1 kg d'antioxydant
- 10 kg d' huile de pin
- 190 kg d'eau

On verse dans une cuve en acier 190 kg d'eau puis 5 kg de solution aqueuse d'ammoniac et on ajoute sous faible agitation 2 kg de NATROSOL. On maintient l'agitation jusqu'à l'obtention d'un gel, puis on augmente la vitesse d'agitation et on ajoute progressivement de l'oxyde de titane, puis de l'oxyde de zinc.

On verse progressivement 500 kg de l'émulsion préparée dans l'exemple 2 sous agitation pendant une demi-heure.

Enfin on ajoute 15 kg du siccatif pour accélérer le séchage, 1 kg d'anti-oxydant pour éviter la formation de peau lors du stockage de la peinture et 10 kg d'huile de pin pour parfumer la peinture.

La peinture blanche obtenue est lessivable. Elle peut être utilisée pour la protection de matériaux, à l'intérieur comme à l'extérieur, ainsi que pour la décoration d'objets.

## Revendications

1. Emulsion, **caractérisée en ce qu'**elle comprend au moins une standolie d'huile végétale ou animale et au moins un émulsifiant naturel, présent dans l'émulsion à des teneurs comprises entre 3 et 10 % en poids du poids total de l'émulsion et choisi parmi la caséine, la lécithine de soja, la lécithine d'oeuf, le monostéarate de glycérol, et **en ce qu'**elle est exempte de solvant ou diluant organique et de résine synthétique.

2. Emulsion selon la revendication 1, **caractérisée en ce que** la standolie d'huile végétale est choisie parmi les standolies d'huile de lin, de ricin, de bois, de soja, de tournesol, de coton, de carthame, d'hévéa, de tabac, de pépins de raisin, d'oeillette.

3. Emulsion selon la revendication 2, **caractérisée en ce que** la standolie d'huile végétale est la standolie d'huile de lin.

4. Emulsion selon la revendication 1, **caractérisée en ce que** la standolie d'huile animale est choisie parmi les standolies d'huiles de poissons.

5. Emulsion selon l'une quelconque des revendications précédentes, **caractérisée en ce que** la standolie est présente dans l'émulsion à des teneurs comprises entre 10 et 60%, et de préférence entre 15 et 40 % en poids du poids total de l'émulsion.

6. Emulsion selon l'une des revendications précédentes, **caractérisée en ce que** l'émulsifiant naturel est la caséine.

7. Emulsion selon l'une quelconque des revendications précédentes, **caractérisée en ce que** l'émulsifiant est présent dans l'émulsion à des teneurs comprises entre 5 et 10%, et de préférence entre 7 et 9% en poids du poids total de l'émulsion.

8. Emulsion selon l'une quelconque des revendications précédentes, **caractérisée en ce que** l'émulsion est réalisée dans un milieu basique.

9. Emulsion selon la revendication 8, **caractérisée en ce que** le milieu basique comprend de l'ammoniac.

10. Emulsion selon la revendication 8 ou 9, **caractérisée en ce que** le pH de l'émulsion est compris entre 8 et 12, de préférence entre 8,5 et 10.

11. Emulsion selon l'une quelconque des revendications précédentes, **caractérisée en ce qu'**elle comprend une ou plusieurs résines naturelles.

12. Emulsion selon la revendication 11, **caractérisée en ce que** la résine naturelle est choisie parmi le latex, la colophane et la gomme arabique.

13. Emulsion selon l'une quelconque des revendications précédentes, **caractérisée en ce qu'**elle comprend en outre des adjuvants choisis parmi les agents épaississants ou gélifiants et les agents stabilisants.

14. Peinture, **caractérisée en ce qu'**elle comprend une émulsion selon l'une quelconque des revendications précédentes et un ou plusieurs pigments blancs ou colorés.

15. Peinture selon la revendication 14, **caractérisée en ce qu'**elle comprend en outre des adjuvants choisis parmi les charges, les siccatifs, les agents anti-oxydants, les agents anti-mousse et les huiles parfumées.

16. Utilisation d'une peinture selon l'une des revendications14 ou 15 pour la protection intérieure ou extérieure de matériaux.

17. Utilisation d'une peinture selon l'une des revendications 14 ou 15 pour la décoration d'objets.

## Claims

1. Emulsion, **characterized in that** it comprises at least one vegetable or animal oil stand oil and at least one natural emulsifier, present in the emulsion in amounts between 3 and 10% by weight of the total weight of the emulsion and chosen from casein, soya lecithin, egg lecithin, glycerol monostearate, and **in that** it is free from organic solvent or diluent and from synthetic resin.

2. Emulsion according to Claim 1, **characterized in that** the vegetable oil stand oil is chosen from the stand oils of linseed, castor, wood, soybean, sunflower, cottonseed, safflower, rubber seed, tobacco seed, grapeseed and poppy seed oils.

3. Emulsion according to Claim 2, **characterized in that** the vegetable oil stand oil is linseed oil stand oil.

4. Emulsion according to Claim 1, **characterized in that** the animal oil stand oil is chosen from the stand oils of fish oils.

5. Emulsion according to any one of the preceding claims, **characterized in that** the stand oil is present in the emulsion in amounts between 10 and 60%, and preferably between 15 and 40%, by weight of the total weight of the emulsion.

6. Emulsion according to one of the preceding claims, **characterized in that** the natural emulsifier is casein.

7. Emulsion according to any one of the preceding claims, **characterized in that** the emulsifier is present in the emulsion in amounts between 5 and 10%, and preferably between 7 and 9%, by weight of the total weight of the emulsion.

8. Emulsion according to any one of the preceding claims, **characterized in that** the emulsion is produced in a basic medium.

9. Emulsion according to Claim 8, **characterized in that** the basic medium comprises ammonia.

10. Emulsion according to Claim 8 or 9, **characterized in that** the pH of the emulsion is between 8 and 12, preferably between 8.5 and 10.

11. Emulsion according to any one of the preceding claims, **characterized in that** it comprises one or more natural resins.

12. Emulsion according to Claim 11, **characterized in that** the natural resin is chosen from latex, rosin and gum arabic.

13. Emulsion according to any one of the preceding claims, **characterized in that** it comprises, in addition, adjuvants chosen from thickening or gelling agents and stabilizers.

14. Paint, **characterized in that** it comprises an emulsion according to any one of the preceding claims and one or more white or coloured pigments.

15. Paint according to Claim 14, **characterized in that** it comprises, in addition, adjuvants chosen from fillers, driers, antioxidants, anti-foaming agents and perfumed oils.

16. Use of a paint according to either of Claims 14 and 15 for the interior or exterior protection of materials.

17. Use of a paint according to either of Claims 14 and 15 for the decoration of objects.

## Patentansprüche

1. Emulsion, **dadurch gekennzeichnet, dass** sie mindestens ein Pflanzen- oder Tieröl-Standöl und mindestens einen natürlichen Emulgator umfasst, der in der Emulsion in Gehalten zwischen 3 und 10 Gew.-%, bezogen auf das Gesamtgewicht der Emulsion, vorliegt und aus Casein, Sojalecithin, Eilecithin, Glycerinmonostearat ausgewählt ist, und **dadurch**, dass sie kein organisches Lösungsmittel oder Verdünnungsmittel und kein synthetisches Harz enthält.

2. Emulsion nach Anspruch 1, **dadurch gekennzeichnet, dass** das Pflanzenöl-Standöl aus Leinöl-, Rizin-, Holzöl-, Sojaöl-, Sonnenblumenöl-, Baumwollsamenöl-, Distelöl-, Kautschuk-, Tabak-, Traubenkernöl-, Mohnöl-Standölen ausgewählt ist.

3. Emulsion nach Anspruch 2, **dadurch gekennzeichnet, dass** das Pflanzenöl-Standöl Leinöl-Standöl ist.

4. Emulsion nach Anspruch 1, **dadurch gekennzeichnet, dass** das Tieröl-Standöl aus Fischöl-Standölen ausgewählt ist.

5. Emulsion nach einem der vorhergehenden Ansprüche, **dadurch gekennzeichnet, dass** das Standöl in der Emulsion in Gehalten zwischen 10 und 60 Gew.-% und vorzugsweise zwischen 15 und 40 Gew.-%, bezogen auf das Gesamtgewicht der Emulsion, vorliegt.

6. Emulsion nach einem der vorhergehenden Ansprüche, **dadurch gekennzeichnet, dass** der natürliche Emulgator Casein ist.

7. Emulsion nach einem der vorhergehenden Ansprüche, **dadurch gekennzeichnet, dass** der Emulgator in der Emulsion in Gehalten zwischen 5 und 10 Gew.-% und vorzugsweise zwischen 7 und 9 Gew.-%, bezogen auf das Gesamtgewicht der Emulsion, vorliegt.

8. Emulsion nach einem der vorhergehenden Ansprüche, **dadurch gekennzeichnet, dass** die Emulsion in einem basischen Medium hergestellt wird.

9. Emulsion nach Anspruch 8, **dadurch gekennzeichnet, dass** das basische Medium Ammoniak umfasst.

10. Emulsion nach Anspruch 8 oder 9, **dadurch gekennzeichnet, dass** der pH der Emulsion zwischen 8 und 12 und vorzugsweise zwischen 8,5 und 10 beträgt.

11. Emulsion nach einem der vorhergehenden Ansprüche, **dadurch gekennzeichnet, dass** sie ein oder mehrere natürliche Harze umfasst.

12. Emulsion nach Anspruch 11, **dadurch gekennzeichnet, dass** das natürliche Harz aus Latex, Kolophonium und Gummiarabicum ausgewählt ist.

13. Emulsion nach einem der vorhergehenden Ansprüche, **dadurch gekennzeichnet, dass** sie ferner Hilfsstoffe umfasst, die aus Verdickungs- oder Geliermitteln und Stabilisierungsmitteln ausgewählt sind.

14. Anstrichmittel, **dadurch gekennzeichnet, dass** es eine Emulsion nach einem der vorhergehenden Ansprüche und ein oder mehrere weiße oder farbige Pigmente umfasst.

15. Anstrichmittel nach Anspruch 14, **dadurch gekennzeichnet, dass** es ferner Hilfsstoffe umfasst, die aus Füllstoffen, Trocknungsmitteln, Antioxidantien, Antischäummitteln und Duftölen ausgewählt sind.

16. Verwendung eines Anstrichmittels nach einem der Ansprüche 14 oder 15 zum inneren oder äußeren Schutz von Werkstoffen.

17. Verwendung eines Anstrichmittels nach einem der Ansprüche 14 oder 15 zur Dekoration von Gegenständen.
